# EUROPEAN PATENT APPLICATION

(11) **EP 4 487 694 A1**
(43) Date of publication of application: **08.01.2025**
(21) Application number: 24176834.0
(22) Date of filing: 20.05.2024
(51) Int. Cl.: A23L 2/56, A23L 27/10, A23L 27/12, B01D 11/02, B01D 11/04, C11B 9/02, C12C 3/08, C12C 12/00, C12H 1/16

(54) **PROCESS AND SYSTEM FOR THE EXTRACTION OF ESSENTIAL OILS FROM PLANT BIOMASS AND THEIR USE IN LIQUID FOOD PRODUCTS**

(30) Priority: 06.07.2023 IT 202300014085
(71) Applicant: Birrificio Baladin S.S. Agricola, 12060 Piozzo (CN) (IT); B.Botanic S.r.l., 12060 Piozzo (CN) (IT)
(72) Inventor: Ferrario, Alessandro Mario, 12060 Piozzo (IT); Lamberti, Lorenzo, 12060 Piozzo (IT)
(74) Representative: Garavelli, Paolo

(57) **Abstract**

A process and a plant for the extraction of essential oils from plant biomass and the related preparation of drinks are described; the process includes the steps of: extraction of essential oils from plant biomass through microwave-assisted hydro-distillation; conveyance of essential oils within drinks; in which the extraction step of essential oils from plant biomass through microwave-assisted hydro-distillation takes place using a microwave reactor and includes the substeps of: hydro-distillation, in which the heating of the system is induced by 2 magnetrons that irradiate the biomass in the reactor uniformly, the ability to transfer thermal energy within the system in this way reducing combustion phenomena and the production of unwanted artefacts which would alter the organoleptic properties of the extract.

## Description

The present invention refers to a process and a plant for the extraction of essential oils from plant biomass and their use in liquid food products.

So far, no study has dealt with the extraction of essential oils from plant biomass and the use of these extracts in liquid food products, for example beverages such as beers.

Object of the present invention is therefore extracting essential oils from plant biomass to use them in an efficient, innovative and immediate way in liquid food products, in particular beer, in order to enrich it with the properties of the essential oils themselves.

The above and other objects and advantages of the invention, as will appear from the following description, are achieved with a process and a plant for the extraction of essential oils from vegetable biomass and their use in liquid food products such as those described in the respective independent claims. Preferred embodiments and non-trivial variations of the present invention form the subject matter of the dependent claims.

It is understood that all attached claims form an integral part of this description.

It will be immediately obvious that countless variations and modifications can be made to what is described (for example relating to shape, dimensions, arrangements and parts with equivalent functionality) without departing from the scope of the invention as appears from the attached claims.

The present invention will be better described by some preferred embodiments thereof, provided by way of example and not by way of limitation.

The process of the invention is therefore used for the extraction of essential oils from plant biomass and their use in liquid food products, and includes the steps of:
- extraction of essential oils from plant biomass through microwave-assisted hydro-distillation
- conveyance of essential oils within liquid food products, in particular drinks.

In particular, the extraction step of essential oils from plant biomass through microwave-assisted hydro-distillation involves the use of a microwave reactor, and includes the sub-steps described below.

A preferred implementation of the extraction process was carried out using the ETHOS XL microwave reactor from the Milestone company. The process consists of a hydro-distillation in which the heating of the system is induced by 2 magnetrons which irradiate the biomass in the reactor in a uniform way. The ability to transfer thermal energy within the system in this way, without using flames or heated surfaces, reduces combustion phenomena and the production of unwanted artefacts which would alter the organoleptic properties of the extract. Another peculiarity of this process is that the oils extracted through hydro-distillation are pure and without any type of solvent, so they take up little space and only require a dark refrigerated environment for their conservation.

In particular, the step of conveying essential oils into drinks includes the following sub-steps.

Given the lipophilic nature of essential oils, solubilization in aqueous drinks is very difficult. In order to stably resuspend the essential oils, it is necessary to create an emulsion inside the drink so as not to form a bi-phase on the surface. To create this emulsion, in a preferred embodiment, the Applicant took a sample of beer within which to resuspend the oils, and, following a series of serial dilutions, resuspended the essential oils in one hundred times their volume. At the end of this operation, a stabilized emulsion was obtained through ultrasound treatment, and was kept under constant stirring until inoculation. To introduce this emulsion created in a laboratory, a dispenser connected downstream to the centrifugation and carbonation system of a brewery was used. This dispenser is able to take small quantities of a liquid and introduce them into the product flow coming out of the centrifuge and carbonator, in order to facilitate its re-suspension within the final total volume. The beer centrifugation and carbonation system available to the brewery was able to process an average of 4000 L/h while the dispenser managed to introduce 2mL/L. In this way, it was possible to constantly introduce small quantities of the essential oil suspension without inducing a local over-concentration which would have inevitably caused the reappearance of the essential oil/beer bi-phase.

The present invention also relates to a plant (not illustrated) for the extraction of essential oils from plant biomass and their use in liquid food products; this system includes:
- means for extracting essential oils from plant biomass through microwave-assisted hydro-distillation
- means for conveying essential oils within liquid food products, in particular drinks.

In particular, the means for extracting essential oils from plant biomass through microwave-assisted hydro-distillation include:
- a microwave reactor;
- hydro-distillation means, in which the heating of the system is induced by 2 magnetrons which irradiate the biomass in the reactor in a uniform way, the ability to transfer thermal energy within the system in this way reducing combustion phenomena and production of unwanted artefacts which would alter the organoleptic properties of the extract;
- means for preserving the extracted oils, pure, without any type of solvent and which take up little space, in a dark refrigerated environment.

Finally, in particular, the means for conveying essential oils within liquid food products, in particular drinks, include:
- means for creating an emulsion inside the drink so as not to form a bi-phase on the surface, by re-suspension of the oils in the drink in a quantity much higher (about a hundred times) than their volume, following a series of serial dilutions;
- means for obtaining a stabilized emulsion through ultrasound treatment;
- means for maintaining the emulsion in constant agitation until its introduction into the drink;
- means for introducing the emulsion into the drink via a dispenser connected downstream of a beverage production plant, this dispenser being able to withdraw small quantities of a liquid and introduce them into the product flow exiting the plant of production in order to facilitate its re-suspension within the final total volume of the drink.

According to the practical embodiment described, the plant for the production of the drink is a beer centrifugation and carbonation plant capable of processing an average of 4000 L/h, while the dispenser is able to introduce 2mL/L of emulsion, in this thus managing to constantly introduce small quantities of the essential oil suspension without inducing a local over-concentration which would inevitably cause the reappearance of the essential oil/beer bi-phase.

In particular, the plant biomasses tested effectively for the extraction of essential oils were:
- inflorescences, such as *Cannabis Sativa* and hops; or
- seeds, such as coriander; or
- citrus peels, such as bergamot.

## Claims

1. Process for the extraction of essential oils from plant biomass and the related preparation of drinks, the process including the steps of:
- extraction of essential oils from plant biomass through microwave-assisted hydro-distillation
- conveyance of essential oils within drinks; wherein the extraction step of essential oils from plant biomass through microwave-assisted hydro-distillation takes place using a microwave reactor and includes the sub-steps of:
- hydro-distillation, in which the heating of the system is induced by 2 magnetrons which irradiate the biomass in the reactor in a uniform way, the ability to transfer thermal energy within the system in this way reducing combustion phenomena and the production of unwanted artefacts which would alter the organoleptic properties of the extract;
the procedure also includes the step of:
- conservation of the extracted oils, pure, without any type of solvent and which take up little space, in a dark refrigerated environment.

2. Process according to claim 1, wherein the step of conveying the essential oils inside the drinks includes the sub-steps of:
- creating an emulsion inside the drink so as not to form a bi-phase on the surface, through re-suspension of the oils in the drink in approximately one hundred times their volume, following a series of serial dilutions;
- obtaining a stabilized emulsion through ultrasound treatment;
- maintaining the emulsion in constant agitation until its introduction into the drink;
- introducing the emulsion into the drink via a dispenser connected downstream of a beverage production plant, this dispenser being designed to withdraw small quantities of a liquid and introduce them into the flow of drink exiting the production plant in so as to facilitate its re-suspension within the final total volume of the drink.

3. Process according to claim 2, wherein the production of the drink is carried out in a beer centrifugation and carbonation system designed to process an average of 4000 L/h, while the dispenser manages to introduce 2mL/L of emulsion, in this way managing to constantly introduce small quantities of the essential oil suspension without inducing a local over-concentration which would inevitably cause the reappearance of the essential oil/beer bi-phase.

4. Process according to any of the previous claims, in which the plant biomasses used for the extraction of essential oils are: inflorescences, such as *Cannabis Sativa* and hops; or seeds, such as coriander; or citrus peels, such as bergamot.

5. Plant for the extraction of essential oils from plant biomass and the related preparation of drinks, the plant including:
- means for extracting essential oils from plant biomass through microwave-assisted hydro-distillation
- means for conveying essential oils into drinks,
wherein the means for extracting essential oils from plant biomass through microwave-assisted hydro-distillation include:
- a microwave reactor;
- hydro-distillation means, in which the heating of the system is induced by 2 magnetrons which irradiate the biomass in the reactor in a uniform way, the ability to transfer thermal energy within the system in this way reducing combustion phenomena and production of unwanted artefacts which would alter the organoleptic properties of the extract;
- means for preserving the extracted oils, pure, without any type of solvent and which take up little space, in a dark refrigerated environment.

6. System according to claim 5, wherein the means for conveying the essential oils inside the drinks, in particular drinks, include:
- means for creating an emulsion inside the drink so as not to form a bi-phase on the surface, through re-suspension of the oils in the drink in approximately one hundred times their volume, following a series of serial dilutions;
- means for obtaining a stabilized emulsion through ultrasound treatment;
- means for maintaining the emulsion in constant agitation until its introduction into the drink;
- means for introducing the emulsion into the drink via a dispenser connected downstream of a beverage production plant, this dispenser being designed to withdraw small quantities of a liquid and introduce them into the product flow exiting the production plant in order to facilitate its re-suspension within the final total volume of the drink.

7. Plant according to claim 6, wherein the plant for producing the beverage is a beer centrifugation and carbonation plant designed to process an average of 4000 L/h, while the dispenser is able to introduce 2mL/L of emulsion, in this way managing to constantly introduce small quantities of the essential oil suspension without inducing a local over-concentration which would inevitably cause the reappearance of the essential oil/beer bi-phase.

8. Plant according to any of claims 5 to 7 in which the plant biomasses used for the extraction of essential oils are: inflorescences, such as *Cannabis Sativa* and hops; or seeds, such as coriander; or citrus peels, such as bergamot.
